# EUROPÄISCHE PATENTANMELDUNG

(11) **EP 4 650 093 A1**
(43) Veröffentlichungstag der Anmeldung: **19.11.2025**
(21) Anmeldenummer: 25173446.3
(22) Anmeldetag: 30.04.2025
(51) Int. Cl.: B23K 26/142, B23K 26/14, B23K 26/21, B23K 101/36

(54) **SPRITZSCHUTZEINRICHTUNG SOWIE DAMIT VERSEHENE LASERSCHWEISSVORRICHTUNG**

(30) Priorität: 13.05.2024 EP 24175351
(71) Anmelder: Grob-Werke GmbH & Co. KG, 87719 Mindelheim (DE)
(72) Erfinder: Kerler, Jochen, 87745 Eppishausen (DE); Hierl, Patrick, 87742 Dirlewang (DE); Rathgeb, Michael, 86152 Augsburg (DE)
(74) Vertreter: KASTEL Patentanwälte PartG mbB

(57) **Zusammenfassung**

Um ein Laserschweißen von Kontaktelementen zur elektrischen Kontaktierung qualitativ zu verbessern schafft die Erfindung eine Spritzschutzeinrichtung (12) für eine Laserschweißvorrichtung (10) zum Laserschweißen von Kontaktelementen zur elektrischen Kontaktierung, umfassend:
ein Druckstück (14) zum Aufdrücken auf das zu schweißende Bauteil und einen Spritzerschutz (16),
wobei das Druckstück (14) einen Druckstückkörper (18) mit einer Laserstrahlaustrittsmündung (20) aufweist, deren Berandung beim Aufdrücken die Schweißstelle (60.1, 60.2) umgibt, und
wobei der Spritzerschutz (16) als abgewinkeltes Rohr ausgebildet ist, dessen erstes Ende (22) mit dem Druckstück (14) abgeschottet ist und dessen zweites
Ende (24) als Anschluss für eine Absaugung (26) ausgebildet ist, wobei an einem abgewinkelten oder gekrümmten Bereich (28), der dem ersten Ende (22) mit dem Druckstück (14) gegenüberliegt, wenigstens eine Laserstrahleintrittsöffnung (30.1, 30.2) ausgebildet ist. Weiter wird eine Laserschweißvorrichtung (10) mit einer solchen Spritzschutzeinrichtung (12) beschrieben, die computerimplementiert steuerbar ist.

## Beschreibung

Die Erfindung betrifft eine Spritzschutzeinrichtung für eine Laserschweißvorrichtung zum Laserschweißen von Kontaktelementen zur elektrischen Kontaktierung. Weiter betrifft die Erfindung eine damit verbundene Laserschweißvorrichtung.

Die Erfindung liegt auf dem Gebiet des Laserschweißens. Bevorzugtes Anwendungsgebiet von Einrichtungen und Vorrichtungen gemäß Ausführungsformen der Erfindung ist das Gebiet der Batteriezellproduktion. Einrichtungen und Vorrichtungen gemäß der Erfindung werden vorzugsweise für das ZKS-Schweißen von Batteriezellen verwendet (ZKS ist eine Abkürzung für Zellkontaktiersystem(e)).

Zum technologischen Hintergrund wird auf folgende Literaturstellen verwiesen:
[1] WO 2022/156800 A1
[2] CN 215698852 U1
[3] CN 115958290 A1
[4] https://www.youtube.com/watch?v=-vLVN27VMpk

Die Literaturstellen [1] und [2] zeigen Laserschweißvorrichtungen zum ZKS-Schweißen von Batteriezellen.

Zellkontaktiersysteme (ZKS) verbinden einzelne Batteriezellen zu einem Batteriemodul. Bei dem sogenannten Prinzip "Cell2Pack" werden die Batteriezellen direkt zum Batteriepack verarbeitet. Das Kontaktieren der ZKS mit den Batteriezellen erfolgt derzeit generell durch ein Laserschweißverfahren (ZKS-Schweißen). Technisch verunreinigte Batteriezellen weisen eine deutlich reduzierte Leistungsfähigkeit und Lebensdauer auf.

Um eine Verunreinigung durch Schweißspritzer zu vermeiden, werden aktuell folgende Ansätze verfolgt:
- Laserschweißprozess unter Schutzgasatmosphäre
- Einsatz von Blasluftreinigungen (Crossjets) zum Schutz vom Schutzglas der Optik
- Einsatz von Blasluftreinigungen (Crossjets) zum Schutz vom Bauteil vor Schweißspritzern
- Einsatz von Prozessabsaugungen um Schweißspritzer zu erfassen und abzuführen

Alle bisherigen Lösungen weisen unterschiedliche Nachteile auf. Beispielsweise kann ein Einblasen von Blasluft durch Crossjets zu einer großräumigen Verteilung bzw. Emittierung von Partikeln in der Anlage führen. Besonders kritisch ist dabei die Verschmutzung benachbarter Schweißverbindungen. Trotz Einsatz von Blasluftreinigung kann es oftmals zu einer deutlichen Verschmutzung von Optik und Bauteil kommen. Insbesondere ist ein Schutz vor Spritzern gegenüber dem Bauteil nicht gegeben.

Bei einigen bisherigen Lösungsansätzen werden nicht alle Schweißspritzer von der Absauganlage erfasst. Bekannte Lösungen sind nicht für einen "on-the-fly"-Laserschweißprozess geeignet, das heißt nur für während dem Schweißprozess stationäre Laseroptiken.

Einige bisherige Lösungen haben eine unzureichende Schutzgasatmosphäre am Schweißort selbst.

Bei der aus [4] bekannten Lösung ist zwar ein Spritzerschutz vorhanden, dieser ist aber viel zu niedrig und offen und somit unzureichend. Schweißspritzer können ungehindert austreten. Es fehlt eine Objekterfassung und damit eine Erfassung von Schweißspritzern. Zudem ist keine Blasluftvorrichtung vorgesehen; bei Anwendung von Blasluft würden die Schweißspritzer nur weiter entfernt auf das Bauteil blasen. Weiter ist eine Schutzgasatmosphäre unzureichend; Schutzgas wird deutlich entfernt zugeführt, so dass am Schweißort selbst vermutlich gar kein Schutzgas mehr vorhanden ist.

Die Erfindung hat sich zur Aufgabe gestellt, Einrichtungen und Vorrichtungen zur Verfügung zu stellen, mit denen ein verbessertes Laserschweißen von Kontaktelementen zur elektrischen Kontaktierung ermöglicht wird, und insbesondere eine Verschmutzung durch Schweißspritzer reduziert wird.

Zum Lösen dieser Aufgabe schafft die Erfindung eine Spritzschutzeinrichtung nach Anspruch 1. Eine damit versehene Laserschweißvorrichtung ist Gegenstand des Nebenanspruchs.

Vorteilhafte Ausgestaltungen sind Gegenstand der Unteransprüche.

Die Erfindung schafft eine Spritzschutzeinrichtung für eine Laserschweißvorrichtung zum Laserschweißen von Kontaktelementen zur elektrischen Kontaktierung, umfassend:
ein Druckstück zum Aufdrücken auf das zu schweißende Bauteil und
einen Spritzerschutz,
wobei das Druckstück einen Druckstückkörper mit einer
Laserstrahlaustrittsmündung aufweist, deren Berandung beim Aufdrücken die Schweißstelle umgibt, und
wobei der Spritzerschutz als abgewinkeltes Rohr ausgebildet ist, dessen erstes Ende mit dem Druckstück abgeschottet ist und dessen zweites Ende als Anschluss für eine Absaugung ausgebildet ist, wobei an einem abgewinkelten oder gekrümmten Bereich, der dem ersten Ende mit dem Druckstück gegenüberliegt, wenigstens eine Laserstrahleintrittsöffnung ausgebildet ist.

Insbesondere ist das Druckstück dazu eingerichtet, im Betrieb auf das zu schweißende Bauteil gedrückt zu werden, insbesondere derart, dass das Druckstück zumindest teilweise dichtend an dem zu schweißenden Bauteil aufliegt.

Bei einigen Ausführungsformen weist die Spritzschutzeinrichtung eine Luftströmungserzeugungseinrichtung zum Erzeugen einer gezielten Luftströmung von der Schweißstelle hin zur Absaugung auf, um Schweißspritzer gezielt abzuführen und abzusaugen.

Bei einigen Ausführungsformen kann die gezielte Luftströmung aufgrund der Absaugung erzeugt werden, beispielsweise durch Ansaugung von Nebenluft unten am Druckstück, und/oder durch Zuführen der Blasluft. Zusätzlich, oder alternativ, können Öffnungen zum Ansaugen von Luft von außen, sogenannte Nachströmöffnungen, in und/oder oberhalb des Druckstücks vorgesehen sein. Die Nachströmöffnungen sind dazu eingerichtet, Luft von außen in den Spritzerschutz (über die Strömungswirkung der Absaugung) einzusaugen. Die Nachströmöffnungen sind dabei insbesondere derart ausgebildet, dass sie klein genug sind, damit keine Schweißspritzer durch die Nachströmöffnungen nach draußen dringen können, aber ausreichend groß (und/oder in ausreichend großer Anzahl vorhanden), dass ausreichend Luft von außen in den Spritzerschutz eingesaugt werden kann.

Die Anordnung der Nachströmöffnungen in und/oder oberhalb des Druckstücks ist dabei oberhalb einer Schutzgaszuführung in das Innere des Druckstücks, insbesondere in unmittelbarer Nähe zu einer zu schweißenden Stelle, vorgesehen, damit das Schutzgas durch den durch die Nachströmöffnungen angesaugte Luft erzeugten Luftstrom nicht direkt (mit) abgesaugt wird. Mit anderen Worten kann man sagen, dass die Nachströmöffnungen so weit unten wie möglich in und/oder oberhalb des Druckstücks angeordnet sind, um einen definierten Luftstrom generieren zu können, der die Schweißspritzer zuverlässig von der Schweißposition weg transportiert. Gleichzeitig sind die Nachströmöffnungen aber auch so weit oben anzuordnen, dass die durch die Nachströmöffnung erzeugte Luftströmung das Schutzgas nicht mitzieht und so von der Schweißstelle weg transportiert.

Bei einigen Ausführungsformen ist vorgesehen, dass wenigstens ein Lufteinlass in einem Zwischenbereich, der zwischen dem abgewinkelten oder gekrümmten Bereich und dem Druckstück angeordnet ist, in den Spritzerschutz mündet. Dadurch ist es möglich, die Schweißspritzer direkt Richtung Absaugung abzuführen. Zusätzlich ermöglicht eine solche Anordnung, dass die Schweißspritzer im Wesentlichen alle von der Absaugung erfasst werden.

Bei einigen Ausführungsformen ist vorgesehen, dass wenigstens ein Lufteinlass mit wenigstens einer Richtungskomponente tangential zu einer Innenwand des Spritzerschutzes mündet. Eine tangentiale Luftströmung weist weniger Verwirbelungen auf als eine nicht-tangentiale Luftströmung und kann so den Strömungsfluss innerhalb des Spritzerschutzes verbessern.

Bei einigen Ausführungsformen ist vorgesehen, dass wenigstens ein Lufteinlass am Ende einer Luftrohrleitung ausgebildet ist, die integral in einer Wand des Spritzerschutzes ausgebildet ist. Die integrale Ausbildung in der Wand des Spritzerschutes ermöglicht eine dezentrale Platzierung des Luftanschlusses, und somit einen Luftaustritt auf der Gegenseite, auf der nur wenig Platz zur Verfügung steht.

Bei einigen Ausführungsformen ist vorgesehen, dass wenigstens ein Lufteinlass mit wenigstens einer Richtungskomponente quer zu der wenigstens einen Lasereintrittsöffnung mündet, um einen Luftvorhang vor der Lasereintrittsöffnung zu bilden. Der Luftvorhang kann den Austritt von Schweißspritzern sowie eine Verschmutzung oder Beschädigung des Schutzglases der Laseroptik und/oder des Werkstücks reduzieren oder gar verhindern.

Einige Ausführungsformen der Spritzschutzeinrichtung weisen eine Blaslufteinrichtung auf, die dazu ausgebildet ist, Luft durch den Lufteinlass einzublasen. Zusätzlich oder alternativ kann die Spritzschutzeinrichtung Öffnungen, sogenannte Nachströmöffnungen, unten am Druckstück aufweisen, durch die beispielsweise Nebenluft angesaugt werden kann. So kann die Zuluft in den Spritzerschutz erhöht werden und dadurch ein differenziertes Strömungsverhalten der Schweißspritzer generiert werden.

Bei einigen Ausführungsformen ist vorgesehen, dass der Spritzerschutz als knieförmiges Rohr mit einem Kniebereich als abgewinkelter oder gekrümmter Bereich ausgebildet ist. Dies ermöglicht eine möglichst einfache Anordnung der Laseroptik mit Laserstrahl "von oben nach unten" bei gleichzeitiger Realisierung einer Absaugung. Eine Absaugung bzw. Abführung von der Schweißstelle direkt nach oben ist bei dieser möglichst einfach Anordnung der Laseroptik mit Laserstrahl nicht möglich.

Bei einigen Ausführungsformen ist vorgesehen, dass ein zwischen dem abgewinkelten oder gekrümmten Bereich und dem Druckstück angeordneter Zwischenbereich des Spritzerschutzes eine konkav gekrümmte Innenwand und/oder eine Innenwand mit elliptischem oder kreisförmigem Querschnitt aufweist. Bei einigen Ausführungsformen ist die Geometrie der Innenwand so gewählt, dass Totbereiche der Strömung vermieden werden. Darüber hinaus kann so das Strömungsverhalten verbessert, insbesondere optimiert, werden, wodurch eine Ablagerung von Schweißspritzern, die nicht von der Strömung erfasst werden, deutlich reduziert oder gar verhindert werden kann.

Bei einigen Ausführungsformen ist vorgesehen, dass das Druckstück eine Durchgangsöffnung zum Durchleiten des Laserschweißstrahls zu der Laserstrahlaustrittsmündung aufweist, wobei ein Lufteinlasskanal mit einer von der Laserstrahlaustrittsmündung weg gerichteten Richtungskomponente schräg in die Durchgangsöffnung mündet, um einen von der Laserstrahlaustrittsmündung weg führenden Absaugluftstrom zu erzeugen. Insbesondere geht die Durchgangsöffnung fließend in die Laserstrahlaustrittsmündung über. Mit anderen Worten kann man sagen, dass die Laserstrahlaustrittsmündung ein axiales Ende der Durchgangsöffnung bildet.

Bei einigen Ausführungsformen ist vorgesehen, dass die Laserstrahlaustrittsmündung exzentrisch an dem Druckstückkörper angeordnet ist.

Bei einigen Ausführungsformen ist vorgesehen, dass das Druckstück drehbar ist und/oder frei in seiner Drehlage änderbar ist. Insbesondere ist das Drehstück derart drehbar eingerichtet, dass die an dem Druckstück exzentrisch angeordnete Laserstrahlaustrittmündung, und damit auch die Durchgangsöffnung im Druckstück oberhalb der Laserstrahlaustrittsmündung, in verschiedene, insbesondere vorbestimmte, Positionen verstellbar ist.

Bei einigen Ausführungsformen ist vorgesehen, dass das Druckstück mittels eines Drehantriebes angetrieben drehbar ist.

Bei einigen Ausführungsformen ist vorgesehen, dass der Spritzerschutz mehrere Lasereintrittsöffnungen aufweist, die an unterschiedliche, insbesondere vorbestimmte, Drehstellungen des Druckstücks angepasst sind. Insbesondere sind die mehreren Lasereintrittsöffnungen derart ausgebildet und angeordnet, dass je eine der Lasereintrittsöffnungen mit der Laserstrahlaustrittsmündung in einer der vorbestimmten Drehstellungen des Drehstücks einen Laserstrahldurchtrittskanal bildet. Auf diese Weise können mehrere Stellen an dem zu schweißenden Bauteil geschweißt werden, ohne dass die Spritzschutzeinrichtung neu positioniert werden muss.

Zum Beispiel kann das Drehstück, wenn der Spritzerschutz zwei Lasereintrittsöffnungen aufweist, zwischen zwei Drehstellungen drehend verstellbar sein, wobei in einer ersten Drehstellung hiervon eine erste der zwei Lasereintrittsöffnungen mit der am Druckstück angeordneten Laserstrahlaustrittsmündung einen Laserstrahldurchtrittskanal bildet, und in einer zweiten Drehstellung hiervon eine zweite der zwei Lasereintrittsöffnungen mit der am Druckstück angeordneten Laserstrahlaustrittsmündung einen Laserstrahldurchtrittskanal bildet.

Bei einigen Ausführungsformen ist vorgesehen, dass die so ausgebildeten Laserstrahldurchtrittskanäle separat voneinander ausgebildete Absaugkanäle aufweisen, die alle in ein gemeinsames Hauptrohr der Absaugung münden. So können in jedem Laserstrahldurchtrittskanal für die Absaugung optimale Strömungsbedingungen hergestellt werden.

Einige Ausführungsformen der Spritzschutzeinrichtung weisen eine Bewegungseinrichtung zum Bewegen des Spritzerschutzes und/oder des Druckstücks auf das zu schweißende Bauteil zu und von diesem weg und/oder in Querrichtung hierzu auf. Durch die Bewegungseinrichtung ist es möglich, bei mehreren zu schweißenden Bereichen an dem zu schweißenden Bauteil, den Spritzerschutz von einem Bereich zum nächsten zu bewegen. Ebenfalls ermöglicht die Bewegungseinrichtung es, den Spritzerschutz zu Beginn der Schweißarbeiten an dem zu schweißenden Bauteil zu diesem hinzubewegen und nach Abschluss der Schweißarbeiten, von diesem wieder weg zu bewegen. Darüber hinaus ist es möglich, die Bewegungseinrichtung über eine Steuerung die Bewegungen des Spritzerschutzes automatisiert ablaufen zu lassen.

Einige Ausführungsformen der Spritzschutzeinrichtung weisen eine bewegliche Konsole auf, auf die der Spritzerschutz gesteckt und mit einer Verdrehsicherung gegen Verdrehen gesichert ist. Somit kann der Spritzerschutz mit dem Druckstück, insbesondere relativ zu dem zu verschweißenden Bauteil, auch bei einer feststehenden Laseroptik bewegt bzw. verfahren werden, um mehrere Schweißpositionen anzufahren, für die der Laserstrahl der feststehenden Laseroptik unterschiedlich ausgelenkt werden muss.

Gemäß einem weiteren Aspekt schafft die Erfindung eine Laserschweißvorrichtung zum Laserschweißen von Kontaktelementen zur elektrischen Kontaktierung, insbesondere zum Schweißen von Kontaktelementen zur Batteriezellkontaktierung; umfassend eine Laserschweißquelle und eine Spritzschutzeinrichtung nach einer der voranstehenden Ausgestaltungen.

Bei einigen Ausführungsformen weist die Laserschweißvorrichtung eine Steuerung auf und ist dazu eingerichtet, die Laserstrahlaustrittsmündung des Druckstücks um eine Schweißstelle herum zu platzieren und mittels des Druckstücks das zu schweißende Bauteil auf einen Kontaktpartner zu drücken und mittels der Laserstrahlquelle einen Laserstrahl durch die wenigstens eine Laserstrahleintrittsöffnung in dem Spritzerschutz und die Laserstrahlaustrittsmündung in dem Druckstück auf die Schweißstelle zu richten und dann die Laserstrahlaustrittsmündung zu der nächsten Schweißstelle zu verfahren, um den Vorgang dort zu wiederholen.

Die Steuerung ist insbesondere mit einem Prozessor und einem Speicher versehen, in dem ein entsprechendes Computerprogramm mit Anweisungen zum Steuern geladen ist.

Einige Ausführungsformen zielen darauf ab, Einrichtungen und Vorrichtungen zur Verfügung zu stellen, mit denen ein dahingehend verbessertes ZKS-Schweißen ermöglicht ist, dass die damit gefertigten Batterien eine erhöhte Leistungsfähigkeit und Lebensdauer haben.

Einige Ausführungsformen der Erfindung betreffen eine Vorrichtung zum Erfassen von Schweißspritzern, insbesondere beim ZKS-Schweißen von Batteriezellen, Batteriemodulen, oder Batteriepacks.

Bevorzugte Ausführungsformen haben gegenüber bekannten Lösungen einen deutlich verbesserten Spritzerschutz, so dass Schweißspritzer an einem Austreten gehindert werden. Einige Ausführungsformen sehen ein Erfassen, also ein Einsammeln oder Einfangen, des Objekts und damit ein Erfassen der Schweißspritzer vor. Bei einigen Ausführungsformen ist eine Blasluftvorrichtung vorgesehen, wobei weiter bevorzugt die Blasluft so geleitet wird, dass Schweißspritzer vom Bauteil abgehalten werden. Einige Ausführungsformen sehen eine Schutzgasatmosphäre für die Schweißstelle vor.

Besonders bevorzugte Ausgestaltungen der Erfindung zielen darauf ab, einen prozesssicheren, bauteilschützenden Laserschweißprozess zu realisieren, gleichbedeutend mit einer prozesssicheren Erfassung aller Schweißspritzer.

Bevorzugte Ausgestaltungen haben insbesondere wenigstens einen, mehrere oder alle der folgenden Vorzüge:
- einen prozesssicheren und hochdynamischen Laserschweißprozess für das ZKS-Schweißen sicherzustellen;
- Wirkprinzipien für die Anforderungen und Bedürfnisse des "on-the-fly"-Laserschweißprozesses für das ZKS-Schweißen anzuwenden;
- folgende Wirkprinzipien/Anforderungen/Einheiten konstruktiv in den zur Verfügung stehenden räumlichen Verhältnisse zu realisieren:
   ∘ Spritzerschutz
   ∘ Blasvorrichtung (Crossjet)
   ∘ Bewegungsfeld für den Laserstrahl
   ∘ Abführung Schweißspritzer über Absauganschluss
- Die Vielfalt und der Einfluss an verschieden gearteten Schweißspritzer (vorrangig Größe und Energie), bei gleichbleibender Erfassungsqualität handhaben zu können

Bevorzugte Ausführungsformen der Erfindung ermöglichen es, eine gezielte Luftströmung von der Schweißstelle hin zur Absaugvorrichtung zu erzeugen, um Schweißspritzer gezielt abzuführen und abzusaugen. Dadurch kann eine Ablagerung von Schweißspitzern reduziert oder gar vermieden werden. So kann eine Verschmutzung des Werkstücks und/oder eine Beeinträchtigung des Laserprozesses, insbesondere durch Ablagerungen, reduziert oder ganz verhindert werden.

In Kombination mit einer integrierten Blasluftvorrichtung stellen bevorzugte Ausführungsformen der Erfindung gleichzeitig einen prozesssicheren Bauteilschutz sicher, indem Schweißspritzer gezielt in diese Luftströmung geblasen werden und somit prozesssicher abgesaugt und abgeführt werden.

Bei bevorzugten Ausführungsformen sind beide Komponenten (Bauteilschutz und Blasluftvorrichtung) hierbei so angepasst, dass optimale Bedingungen herrschen und ein gleichmäßig verteilter Blasluftstrom sowie ein umfassender Bauteilschutz gewährleistet sind.

Bei bevorzugten Ausführungsformen werden Schweißspritzer an einem Austreten aus der Einrichtung/Vorrichtung gehindert und somit eine Kontaminierung des Bauteils durch Schweißspritzer gezielt vermieden. Insbesondere werden die Schweißspritzer über den Anschluss der Spritzschutzeinrichtung an die Absaugung in einen Filter abtransportiert.

Je nach Laserschweißparameter (z.B. Spotdurchmesser, Verfahrgeschwindigkeit, Laserleistung, Material der Schweißkomponenten) entsteht eine Vielzahl an unterschiedlichen Schweißspritzer, die sich unter anderem in Form, Größe und Energiegehalt unterscheiden. Das Prinzip der bei bevorzugten Ausführungsformen der Erfindung gewählten Lösungen ist hinsichtlich der Vielfalt der Schweißspritzer nicht eingeschränkt, sondern sichert im Gegenteil die prozesssichere Erfassung der unterschiedlichsten Schweißspritzer. Dies kann beispielsweise, aber nicht ausschließlich, durch folgende Merkmale erreicht werden:
- das Druckstück dichtet den Kontakt zum Werkstück ab;
- Lasereintrittsöffnung(en) sind nur so groß, wie vom jeweiligen Prozess benötigt;
- Nachströmöffnungen sind möglichst nahe zur Schweßstelle angeordnet, aber mit ausreichend Abstand, damit das Schutzgas nicht mit der Strömung abgeführt wird;
- Anzahl der Nachströmöffnungen ist darauf abgestimmt, den erforderlichen/gewünschten Luftstrom erzeugen zu können;
- Nachströmöffnungen sind so klein, dass Schweißspritzer durch sie nicht nach außen dringen können;
- Geometrie der Spritzereinrichtung ist darauf abgestimmt, keine Totzonen für die Absaugströmung zu generieren, um einen sicheren Abtransport möglichst aller Schweißspritzer zu gewährleisten, also um ein Ablagern der Schweißspritzer in der Spritzereinrichtung möglichst zu vermeiden.

Insbesondere lassen sich mit bevorzugten Ausgestaltungen der Erfindung einer, mehrere oder alle der folgenden Vorteile erreichen:
- Vermeidung einer Kontaminierung des Bauteils durch Schweißspritzer
- Realisierung einer prozesssicheren Abführung von Schweißspritzern
- Realisierung eines dynamischen, bauteilschonenden und -schützenden "on-the-fly"-Laserschweißprozesses mit bewegter Laseroptik für das ZKS-Schweißen
- Reduzierung der Taktzeit
- Reduzierung von Platzbedarf

Ein Ausführungsbeispiel wird im Folgenden anhand der beigefügten Zeichnungen näher erläutert. Darin zeigt:
- Fig. 1: eine perspektivische, teils schematische Ansicht einer Ausführungsform einer Laserschweißvorrichtung mit Spritzschutzeinrichtung;
- Fig. 2: einen Schnitt durch einen Spritzerschutz der Spritzschutzeinrichtung von Fig. 1;
- Fig. 3: der Schnitt wie in Fig. 2, wobei sich im Spritzerschutz einstellende Luftströmungen dargestellt sind;
- Fig. 4: eine vergrößerte perspektivische Ansicht des Spritzerschutzes;
- Fig. 5: einen Schnitt durch die Laserschweißvorrichtung beim Schweißen an einer ersten Schweißstelle gemäß einer beispielhaften Ausführungsform;
- Fig. 6: die Laserschweißvorrichtung von Fig. 5 beim Schweißen an einer zweiten Schweißstelle;
- Fig. 7: eine geschnittene perspektivische Ansicht der Spritzschutzeinrichtung der Laserschweißvorrichtung gemäß einer beispielhaften Ausführungsform zur Verdeutlichung des Aufbaus einiger Komponenten davon;
- Fig. 8: eine Schnittansicht des Druckstücks gemäß einer beispielhaften Ausführungsform, mit Nachströmöffnungen;
- Fig. 9: mehrere perspektivische Ansichten des Druckstücks mit Nachströmöffnungen gemäß einer beispielhaften Ausführungsform;
- Fig. 10: einen Schnitt durch die Laserschweißvorrichtung beim Schweißen an einer ersten Schweißstelle gemäß einer beispielhaften Ausführungsform;
- Fig. 11: einen Schnitt durch die Laserschweißvorrichtung von Fig. 10 beim Schweißen an einer zweiten Schweißstelle;
- Fig. 12: eine geschnittene perspektivische Ansicht der Spritzschutzeinrichtung der Laserschweißvorrichtung gemäß einer beispielhaften Ausführungsform zur Verdeutlichung des Aufbaus einiger Komponenten davon;
- Fig. 13: mehrere Schnittansichten des Spritzerschutzes gemäß einer beispielhaften Ausführungsform zur Verdeutlichung der separat ausgebildeten Laserstrahldurchtrittskanälen, die jeweils einen Absaugkanal aufweisen.

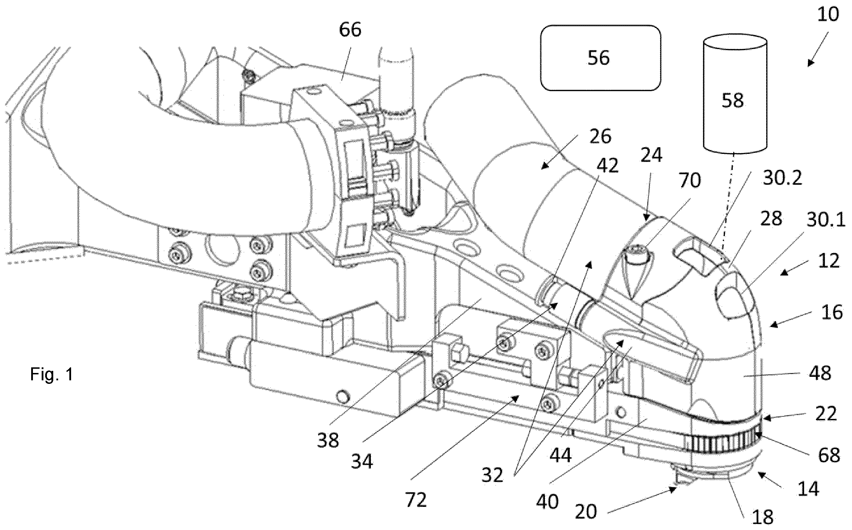

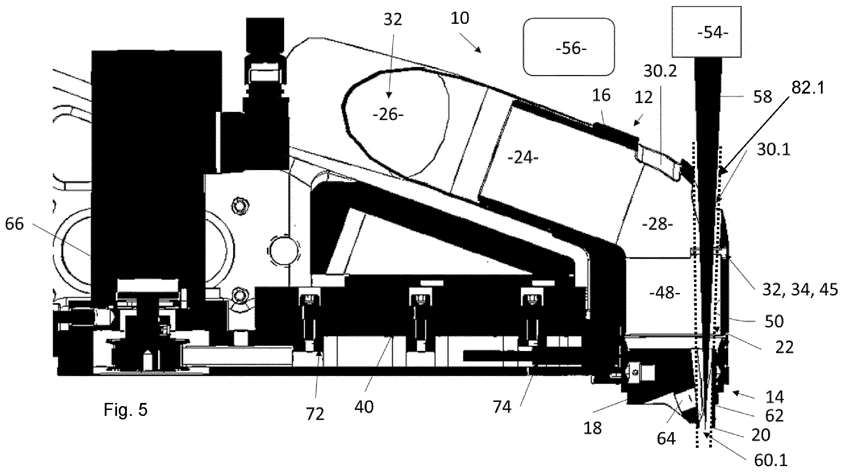

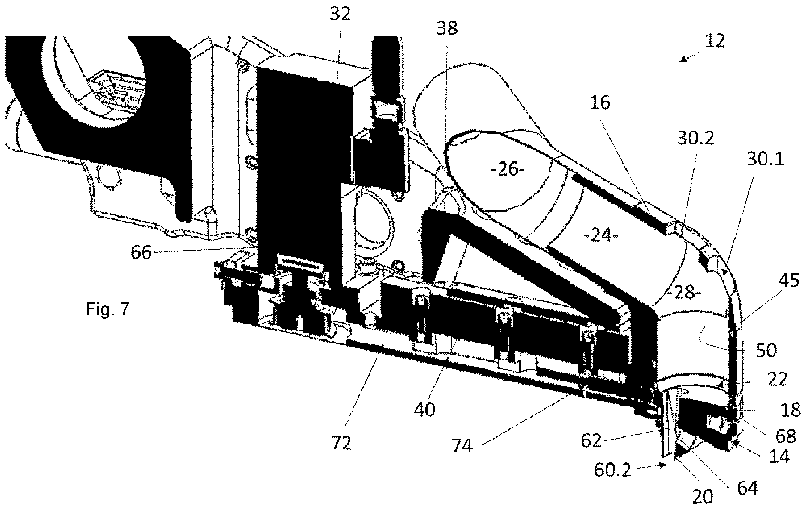

Im Folgenden werden anhand der beigefügten Figuren Ausführungsformen einer Laserschweißvorrichtung 10 zum Laserschweißen von Kontaktelementen zur elektrischen Kontaktierung - insbesondere zum ZKS-Schweißen - sowie einer Spritzschutzeinrichtung 12 für die Laserschweißvorrichtung 10 näher erläutert. Fig. 1, 5 und 6 zeigen die Laserschweißvorrichtung 10 mit der Spritzschutzeinrichtung 12, die zusätzlich alleine in Fig. 7 dargestellt ist.

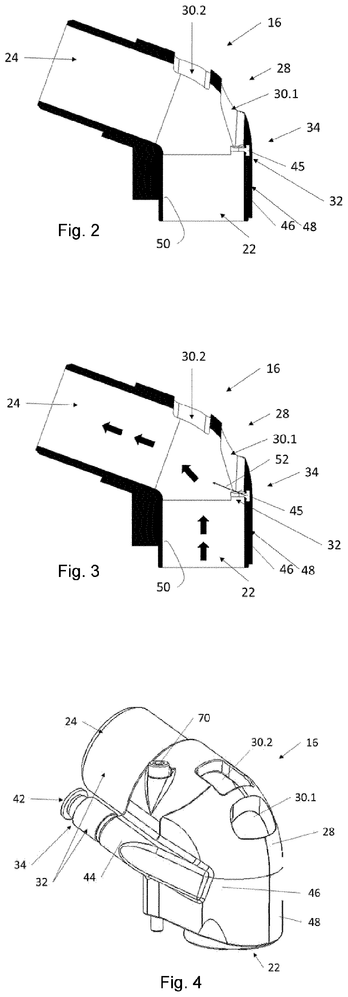

Die Spritzschutzeinrichtung 12 weist ein Druckstück 14 zum Aufdrücken auf das zu schweißende Bauteil und einen näher in den Fig. 2 bis 3 gezeigten Spritzerschutz 16 auf.

Gemäß den Fig. 1 und 5 bis 7 weist das Druckstück 14 einen Druckstückkörper 18 mit einer Laserstrahlaustrittsmündung 20 auf, deren Berandung beim Aufdrücken die Schweißstelle 60.1, 60.2 umgibt. Insbesondere liegt die Berandung der Laserstrahlaustrittsmündung 20 dichtend an dem zu schweißenden Bauteil an.

Gemäß allen beigefügten Figuren ist der Spritzerschutz 16 als abgewinkeltes Rohr - hier insbesondere als knieförmiges Rohr - ausgebildet, dessen erstes Ende 22 mit dem Druckstück 14 abgeschottet ist und dessen zweites Ende 24 als Anschluss für eine Absaugung 26 ausgebildet ist. In dem Spritzerschutz 16 ist an einem abgewinkelten oder gekrümmten Bereich - hier z.B. ausgebildet als Kniebereich 28 -, der dem ersten Ende 22 mit dem Druckstück 14 gegenüberliegt, wenigstens eine Laserstrahleintrittsöffnung 30.1, 30.2 vorgesehen.

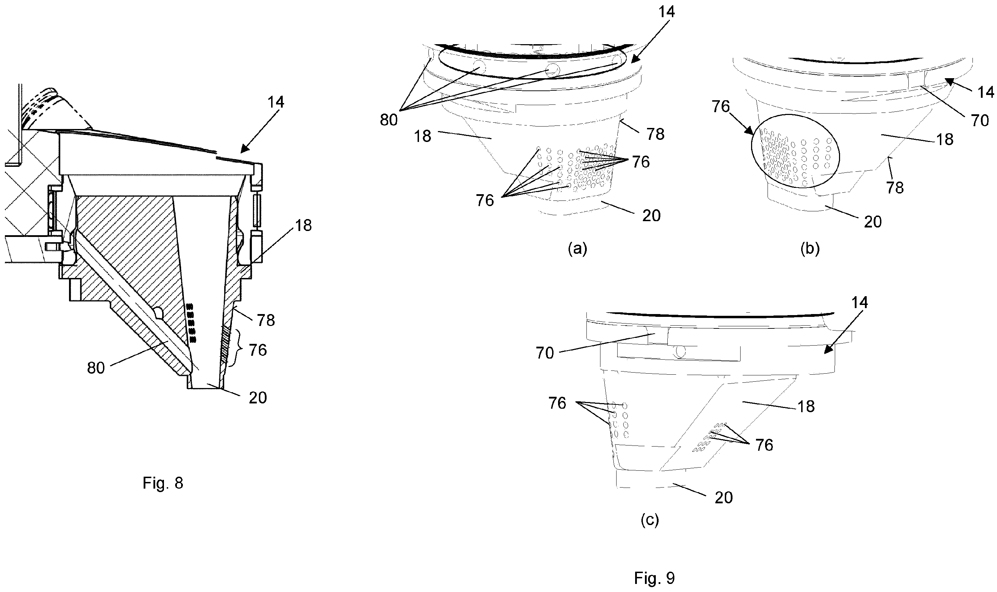

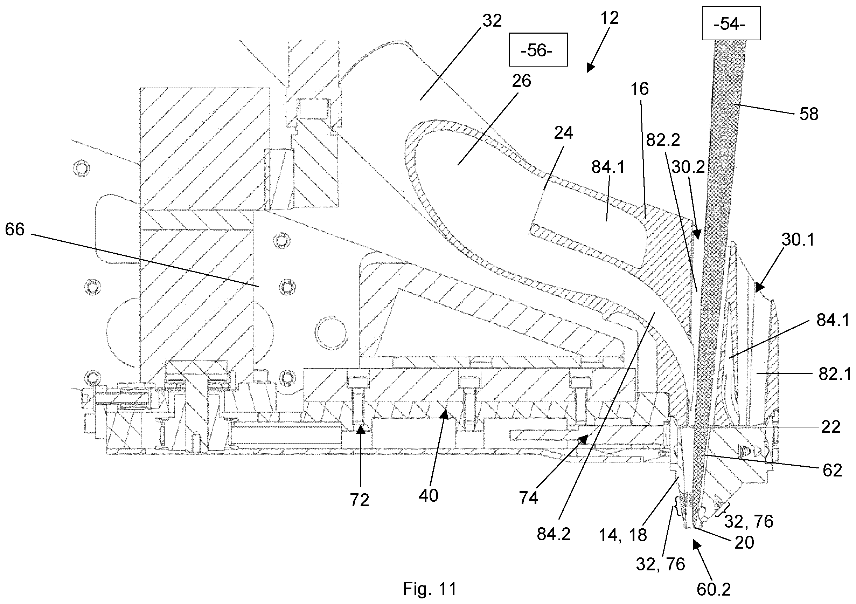

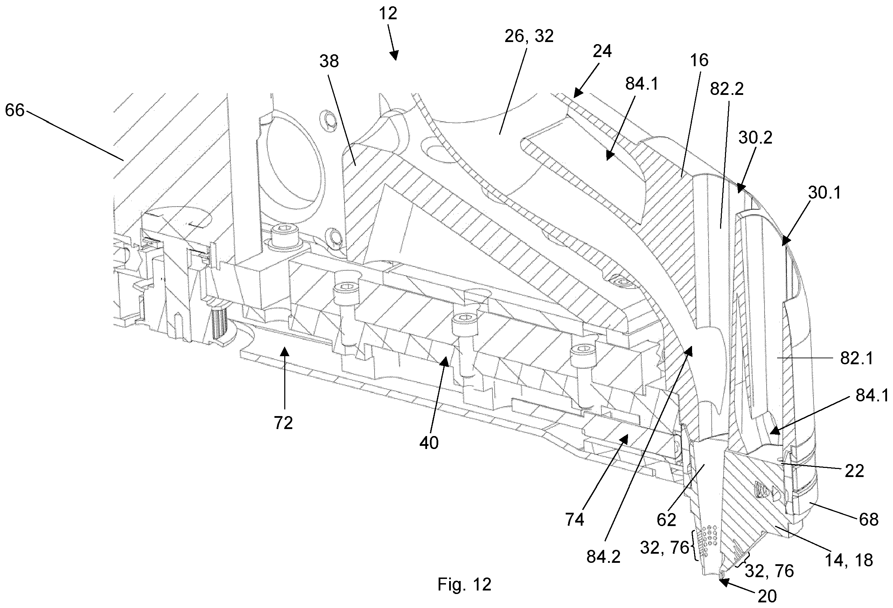

Bei den dargestellten, beispielhaften Ausführungsformen der Spritzschutzeinrichtung 12 ist weiter eine Luftströmungserzeugungseinrichtung 32 zum Erzeugen einer gezielten Luftströmung von der Schweißstelle hin zur Absaugung 26, um Schweißspritzer gezielt abzuführen und abzusaugen, vorgesehen. Bei einigen Ausführungsformen wird die Luftströmung alleine durch den Sog der Absaugung 26 erzeugt. Bei anderen Ausführungsformen ist zusätzlich eine Blaslufteinrichtung 34 (siehe insbesondere Fig. 1 bis Fig. 7) zur Erzeugung von Blasluft vorgesehen. Zusätzlich oder alternativ zur Blaslufteinrichtung 34 können Nachströmöffnungen 76 zur Erzeugung einer Lufströmung weg von der zu schweißenden Stelle (siehe insbesondere Fig. 8 bis Fig. 13) vorgesehen sein.

In Fig. 1 sind insbesondere der Spritzerschutz 16 sowie sein als Anschluss für die Absaugung 26 ausgebildetes Ende, das hier drehbar ausgebildete Druckstück 14, eine stationäre Konsole 38, eine bewegliche Konsole 40 und ein die Blaslufteinrichtung 34 andeutender Anschluss 42 für Blasluft gezeigt.

Der Anschluss 42 für Blasluft ist an einer Luftrohrleitung 44 ausgebildet ist, die integral in einer Wand 46 des Spritzerschutzes 16 ausgebildet ist. Das Ende der Luftrohrleitung 44 bildet wenigstens einen Lufteinlass 45 (Austrittsöffnung der Blaslufteinrichtung 34). Der wenigstens eine Lufteinlass 45 mündet in einem Zwischenbereich 48, der zwischen dem abgewinkelten oder gekrümmten Bereich - Kniebereich 28 - und dem Druckstück 14 angeordnet ist, in den Spritzerschutz 16, und zwar mit wenigstens einer Richtungskomponente tangential zu der Innenwand 50 des Spritzerschutzes 16. Insbesondere mündet der wenigstens eine Lufteinlass 45 mit wenigstens einer Richtungskomponente quer zu der wenigstens einen Lasereintrittsöffnung 30.1, 30.2, um einen in Fig. 3 angedeuteten Luftvorhang 52 vor der Lasereintrittsöffnung 30.1, 30.2 zu bilden und so ein Austreten von Schweißspritzern durch die Lasereintrittsöffnung 30.1, 30.2 zu verhindern.

Der Zwischenbereich 48 des Spritzerschutzes 16 weist die konkav gekrümmte Innenwand 50 auf. Insbesondere weist die Innenwand 50 in diesem Bereich 48 einen elliptischen oder kreisförmigem Querschnitt auf.

Die Fig. 1, 5 und 6 zeigen die Laserschweißvorrichtung 10, die mit der Spritzschutzeinrichtung 12, einer Laserschweißquelle 54 und einer computerimplementierten Steuerung 56 versehen ist. Die Laserschweißvorrichtung 10 wird durch die Steuerung 56 derart gesteuert, dass ein Laserschweißstrahl 58 auf die jeweilige Schweißstelle 60.1, 60.2 gerichtet wird.

Das Druckstück 14 weist eine Durchgangsöffnung 62 zum Durchleiten des Laserschweißstrahls 58 zu der Laserstrahlaustrittsmündung 20 auf. Ein Lufteinlasskanal 64 mündet mit einer von der Laserstrahlaustrittsmündung 20 weg gerichteten Richtungskomponente schräg in die Durchgangsöffnung 62, um einen von der Laserstrahlaustrittsmündung 20 weg führenden Absaugluftstrom zu erzeugen. Die Laserstrahlaustrittsmündung 20 ist exzentrisch an dem Druckstückkörper 18 angeordnet. Das Druckstück 14 ist mittels eines Drehantriebs 66 gesteuert durch die Steuerung 56 angetrieben drehbar. Beispielsweise ist an dem Druckstück 14 eine Riemenscheibe 68 vorgesehen, an der ein Antriebsriemen angreift, welcher durch den Drehantrieb 66 angetrieben wird. Weiter kann ein Sensor 74 zur Riemenbruchkontrolle vorgesehen sein.

Statt des Lufteinlasskanals 64 können an oder oberhalb des Druckstücks 14 auch mehrere Öffnungen 76, insbesondere im näheren Umfeld der Laserstrahlaustrittsmündung 20, vorgesehen sein (siehe Fig. 8 und Fig. 9). Diese sind an einer Mantelfläche 78 des Druckstücks 14 angeordnet und können, wie beispielhaft in Fig. 9 erkennbar, auf der Mantelfläche 78 in Umfangsrichtung verteilt angeordnet sein. Die Anzahl, Größe und Position der Nachströmöffnungen 76 ist dabei so gewählt, dass zum einen keine Schweißspritzer durch die Nachströmöffnungen 76 nach außen dringen können, und zum anderen durch die durch die Nachströmöffnungen 76 von außen angesaugte Luft, ein ausreichender Luftstrom erzeugt wird, der einen sicheren Abtransport der Schweißspritzer von der zu schweißenden Stelle weg in Richtung Absaugung 26 gewährleisten kann.

Gleichzeitig sind sie so angeordnet, dass das in unmittelbarer Nähe zur zu schweißenden Stelle vorhandene Schutzgas durch den Luftstrom nicht abtransportiert (mitgerissen) wird. Mit anderen Worten kann man sagen, dass ein Schutzgas, zum Beispiel über eine Schutzgaszufuhr 80 (siehe Fig. 8) möglichst nahe an die zu schweißende Stelle zugeführt wird, damit der Schweißvorgang unter Schutzgasatmosphäre durchgeführt werden kann. Oberhalb der Schutzgaszufuhr 80 sind die Nachströmöffnungen 76 angeordnet, derart, dass die in senkrechter Richtung gesehen der Schutzgaszufuhr 80 am nächsten angeordneten Nachströmöffnungen 76 mit einem vorbestimmten Abstand zur Schutzgaszufuhr 80 angeordnet sind, der so gewählt ist, dass die untersten Nachströmöffnungen 76 möglichst nah zur zu schweißenden Stelle angeordnet sind, aber weit genug von der Schutzgaszufuhr 80 entfernt ist, dass das über die Schutzgaszufuhr 80 zugeführte Schutzgas nicht von dem durch die Nachströmöffnungen 76 einströmenden Luftstrom mit Richtung Absaugung 26 transportiert wird.

Wie man insbesondere den Fig. 4, 5 und 6 entnehmen kann, hat der Spritzerschutz 16 bei der hier dargestellten Ausführung wenigstens eine erste Lasereintrittsöffnung 30.1, die an eine erste Drehstellung des Drückstücks 14 angepasst ist, und eine zweite Lasereintrittsöffnung 30.2, die an eine zweite Drehstellung des Druckstücks 14 angepasst ist.

Das Druckstück 14 ist an der beweglichen Konsole 40 drehbar gelagert. Der Spritzerschutz 16 ist zum Beispiel mittels einer Verdrehsicherung 70 gegen Verdrehen gesichert an der beweglichen Konsole 40 befestigt. Die bewegliche Konsole 40 bildet einen Teil einer Bewegungseinrichtung 72, die dazu eingerichtet ist, den Spritzerschutz 16 und das Druckstück 14 auf das zu schweißende Bauteil zu und von diesem weg und/oder in Querrichtung hierzu bewegen.

Insbesondere ist die Steuerung 56, die einen Prozessor und einen Speicher mit darin geladenem Computerprogramm aufweist, dazu eingerichtet, die Laserstrahlaustrittsmündung 20 des Druckstücks 14 um eine Schweißstelle 60.1 herum zu platzieren und mittels des Druckstücks 14 das zu schweißende Bauteil auf einen Kontaktpartner, insbesondere dichtend, zu drücken und mittels der Laserstrahlquelle 54 einen Laserschweißstrahl 58 durch die wenigstens eine Laserstrahleintrittsöffnung 30.1, 30.2 in dem Spritzerschutz 16 und durch die Laserstrahlaustrittsmündung 20 in dem Druckstück 14 auf die Schweißstelle 60.1 zu richten und dann die Laserstrahlaustrittsmündung 20 zu der nächsten Schweißstelle 60.2 zu verfahren, um den Vorgang dort zu wiederholen. Das Druckstück 14 wird insbesondere kraftgesteuert, um einen dichtenden Kontakt zwischen dem zu schweißenden Bauteil und des Druckstücks 14 auch bei toleranzbedingten Variationen der Geometrie des zu schweißenden Bauteils und/oder das Kontaktpartners zu gewährleisten.

Demnach weist eine bevorzugte Ausführungsform der Spritzschutzeinrichtung 12 mehrere Systeme auf, die Wirkprinzipien verfolgen, die einzeln oder in Kombinationen zur Vermeidung einer Kontaminierung des Bauteils durch bei einem durch Laserschweißprozesse entstehende Schweißspritzer angewendet werden können.

Bei der dargestellten Ausführungsform sind als solche Systeme insbesondere die Absaugung 26, die Luftströmungserzeugungseinrichtung 32, wie bspw. die Blaslufteinrichtung 34 und/oder die Nachströmöffnungen 76, und der Spritzerschutz 16 vorgesehen.

Die Absaugung 26 ist zur prozesssicheren Erfassung von Schweißspritzern mittels eines Absauggeräts (z.B. Saugmechanismus, Sauggebläse) eingerichtet. Insbesondere dient die Absaugung 26 zur Abführung der Schweißspritzer durch Bildung eines lokalen Unterdrucks.

Die (optionale) Blaslufteinrichtung 34 ist zum zielgerichteten Blasen der Schweißspritzer in Richtung der Absaugung 26 eingerichtet. Die Blaslufteinrichtung 34 ist insbesondere zur Vermeidung des Austritts von Schweißspritzer durch die Lasereintrittsöffnungen 30.1, 30.2 im Spritzerschutz 16 mittels Luftvorhang 52 ausgebildet. Die einen Luftvorhang ausbildende Luftströmung lässt sich bei einigen nicht gezeigten Ausführungen auch alleine durch die Ansaugströmung des Ansauggeräts erzeugen.

Die (optionalen) Nachströmöffnungen 76 (siehe insbesondere Fig. 8 und Fig. 9) sind dazu eingerichtet, durch die in dem Spritzerschutz 16 ausgebildeten Strömung Luft von außerhalb so anzusaugen, dass die Schweißspritzer nahe der zu schweißenden Stelle durch diese Luftströmung gezielt Richtung Absaugung transportiert werden. Dabei sind die Nachströmöffnungen 76 derart ausgebildet, dass keine Schweißspritzer durch die Nachströmöffnungen 76 nach Außen dringen können.

Der Spritzerschutz 16 dient als bauliche Abschottung zwischen Schweißprozess und restlichem Bauteil, um eine Kontaminierung des Bauteils durch Schweißspritzer zu vermeiden. Eine Abschottung nach unten erfolgt durch das Druckstück 14, welches im Betrieb auf dem Bauteil aufliegt und das ZKS auf das Batteriemodul bzw. Batteriepack andrückt.

Wie in Fig. 1 bis Fig. 7 beispielhaft gezeigt, ist durch die Spritzschutzeinrichtung 12 ein Erfassungselement der Laserschweißvorrichtung 10 gebildet, das durch seine Form, die integrierte und gerichtete Blasvorrichtung (Crossjet) und die angeschlossene Absaugung 26 eine gezielte und gerichtete Luftströmung in Richtung der Absaugung 26 aufweist. Schweißspritzer werden von dieser Luftströmung erfasst und in die Absaugöffnung - als Anschluss für Absaugung ausgebildetes Ende 24 - geführt.

Der Spritzerschutz 16 wird hierbei mit der beweglichen Konsole 40 verbunden (gesteckt) und über die Verdrehsicherung 70 in seiner Position gesichert. Der Laserschweißstrahl 58 aus einer Laseroptik der Laserstrahlquelle 54 wird hierbei von oben nach unten durch den Spritzerschutz 16 und das Druckstück 14 auf das Bauteil gerichtet.

Das Druckstück 14 kann hierbei unter dem Spritzerschutz 16, insbesondere frei, in seiner Drehlage geändert werden. Gemäß beispielhaften Ausfürhungsformen ist das Druckstück 14 insbesondere zwischen vorbestimmten Drehpositionen verstellbar. Die Anzahl der vorbestimmten Drehpositionen kann insbesondere von der Anzahl der zu schweißenden Stellen (ohne, dass dabei das Druckstück versetzt werden muss) abhängig sein. Für die unterschiedlichen Drehlagen können mehrere Lasereintrittsöffnungen, in Fig. 1 bis Fig. 13 zwei Lasereintrittsöffnungen 30.1, 30.2, im Spritzerschutz 16 vorgesehen sein.

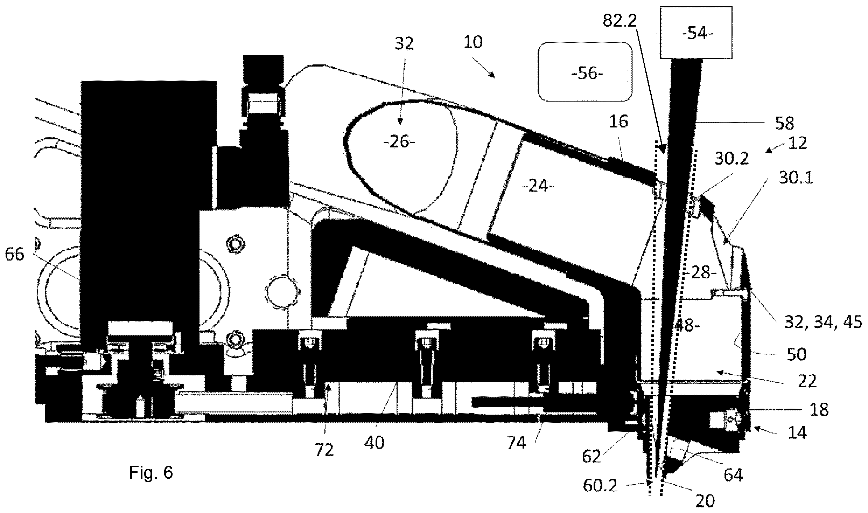

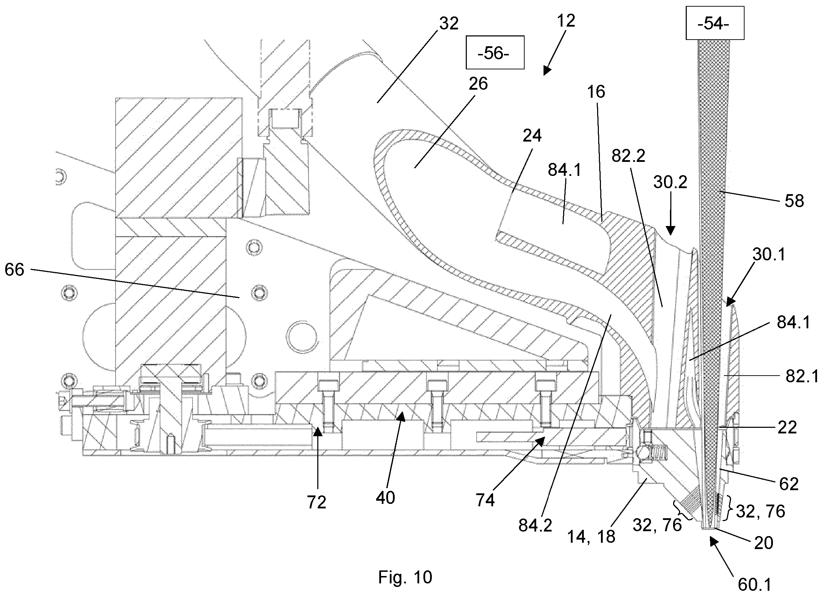

Ferner ist es denkbar, wie in Fig. 10 bis Fig. 13 beispielhaft gezeigt, dass die Laserstrahleintrittsöffnungen 30.1, 30.2 jeweils in einen Laserstrahldurchtrittskanal 82.1, 82.2 münden, die - im Gegensatz zu den Fig. 6 und 7 durch Strichlinien angedeutete "gedachte" Laserstrahldurchtrifftskanäle 82.1, 82.2 - separat voneinander ausgebildet sind. Durch diese vollständig separate Ausführung der Laserstrahldurchtrittskanäle 82.1, 82.2 ist es möglich, für jeden Laserstrahldurchtrittskanal 82.1, 82.2 einen eigenen Absaugkanal 84.1, 84.2 vorzusehen. Die Absaugkanäle 84.1, 84.2 sind dabei so ausgebildet, dass für jeden Laserstrahldurchtrittskanal 82.1, 82.2 eine Luftströmung erzeugt wird, die es erlaubt, die Schweißspritzer möglichst optimal, insbesondere möglichst vollständig, zur Absaugung 26 zu transportieren. Die Laserstrahldurchtrittskanäle 82.1, 82.2 münden an dem der Laserstrahleintrittsöffnung 30.1, 30.2 abgewandten Ende in die Durchgangsöffnung 62 des Druckstücks 14 zum Durchleiten des Laserschweißstrahls (58) zu der Laserstrahlaustrittsmündung (20).

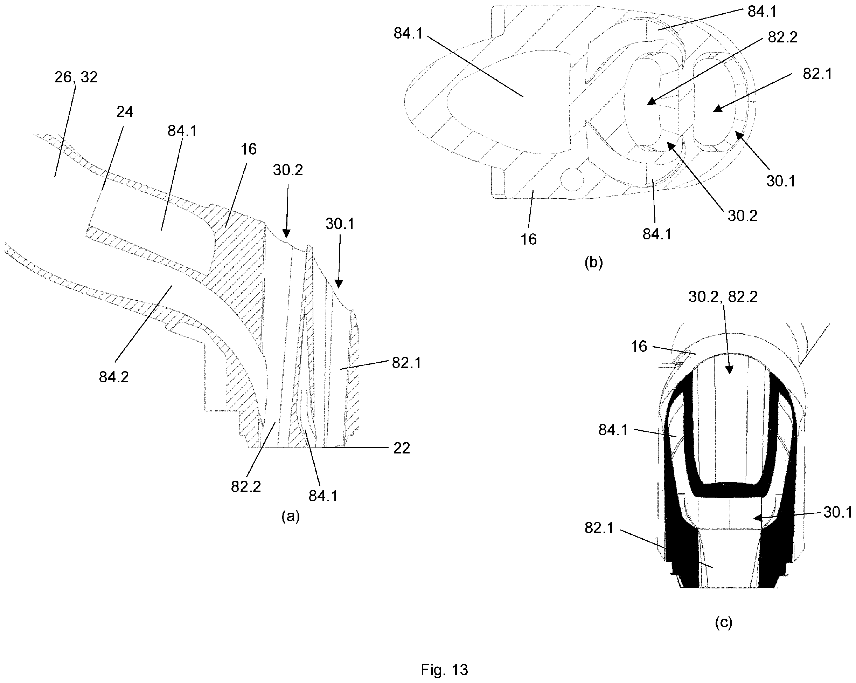

Hierfür wird der Absaugkanal 84.1 des Laserstrahldurchtrittskanals 82.1 seitlich an der zweiten Laserstrahleintrittsöffnung 30.2 bzw. dem zweiten Laserstrahldurchtrittskanal 82.2 vorbeigeführt (siehe insbesondere. Fig. 13) und oberhalb des zweiten Absaugkanals 84.2 der Absaugung 26 zugeführt (siehe auch Fig. 13(a)).

Die Blaslufteinrichtung 34 ist beispielsweise in den Spritzerschutz 16 integriert, beispielsweise durch eine doppelwandige Ausführung. Die Blasluft kann gezielt an einer oder mehreren Stellen - Lufteinlass 45 (Austrittsöffnung Blaslufteinrichtung) - durch unterschiedliche Ausformung ausgeführt werden, um eine prozesssichere Erfassung und Fortführung der Schweißspritzer in Richtung der Absaugöffnung gewährleisten zu können.

### Bezugszeichenliste:

- 10: Laserschweißvorrichtung
- 12: Spritzschutzeinrichtung
- 14: Druckstück
- 16: Spritzerschutz
- 18: Druckstückkörper
- 20: Laserstrahlaustrittsmündung
- 22: erstes Ende
- 24: zweites Ende
- 26: Absaugung
- 28: Kniebereich
- 30.1: erste Laserstrahleintrittsöffnung
- 30.2: zweite Laserstrahleintrittsöffnung
- 32: Luftströmungserzeugungseinrichtung
- 34: Blaslufteinrichtung
- 38: stationäre Konsole
- 40: bewegliche Konsole
- 42: Anschluss für Blasluft
- 44: Luftrohrleitung
- 45: Lufteinlass
- 46: Wand
- 48: Zwischenbereich
- 50: Innenwand
- 52: Luftvorhang
- 54: Laserstrahlquelle
- 56: Steuerung
- 58: Laserschweißstrahl
- 60.1: erste Schweißstelle
- 60.2: zweite Schweißstelle
- 62: Durchgangsöffnung
- 64: Lufteinlasskanal
- 66: Drehantrieb
- 68: Riemenscheibe
- 70: Verdrehsicherung
- 72: Bewegungseinrichtung
- 74: Sensor Riemenbruchkontrolle
- 76: Öffnung (Nachströmöffnung)
- 78: Mantelfläche
- 80: Schutzgaszufuhr
- 82: Laserstrahldurchtrittskanal
- 84: Absaugkanal

## Patentansprüche

1. Spritzschutzeinrichtung (12) für eine Laserschweißvorrichtung (10) zum Laserschweißen von Kontaktelementen zur elektrischen Kontaktierung, umfassend:
ein Druckstück (14) zum Aufdrücken auf das zu schweißende Bauteil und einen Spritzerschutz (16),
wobei das Druckstück (14) einen Druckstückkörper (18) mit einer Laserstrahlaustrittsmündung (20) aufweist, deren Berandung beim Aufdrücken die Schweißstelle (60.1, 60.2) umgibt, und
wobei der Spritzerschutz (16) als abgewinkeltes Rohr ausgebildet ist, dessen erstes Ende (22) mit dem Druckstück (14) abgeschottet ist und dessen zweites Ende (24) als Anschluss für eine Absaugung (26) ausgebildet ist, wobei an einem abgewinkelten oder gekrümmten Bereich (28), der dem ersten Ende (22) mit dem Druckstück (14) gegenüberliegt, wenigstens eine Laserstrahleintrittsöffnung (30.1, 30.2) ausgebildet ist.

2. Spritzschutzeinrichtung (12) nach Anspruch 1, **gekennzeichnet durch** eine Luftströmungserzeugungseinrichtung (32) zum Erzeugen einer gezielten Luftströmung von der Schweißstelle (60.1, 60.2) hin zur Absaugung (26), um Schweißspritzer gezielt abzuführen und abzusaugen.

3. Spritzschutzeinrichtung (12) nach einem der voranstehenden Ansprüche, **dadurch gekennzeichnet,**
**dass** wenigstens ein Lufteinlass (45)
3.1 in einem Zwischenbereich (48), der zwischen dem abgewinkelten oder gekrümmten Bereich (28) und dem Druckstück (14) angeordnet ist, in den Spritzerschutz (16) mündet; und/oder
3.2 mit wenigstens einer Richtungskomponente tangential zu einer Innenwand (50) des Spritzerschutzes (16) mündet; und/oder
3.3 am Ende einer Luftrohrleitung (44) ausgebildet ist, die integral in einer Wand (46) des Spritzerschutzes (16) ausgebildet ist; und/oder
3.4 mit wenigstens einer Richtungskomponente quer zu der wenigstens einen Lasereintrittsöffnung (30.1, 30.2) mündet, um einen Luftvorhang (52) vor der Lasereintrittsöffnung (30.1, 30.2) zu bilden.

4. Spritzschutzeinrichtung (12) nach Anspruch 3, **gekennzeichnet durch** eine Blaslufteinrichtung (34), die dazu ausgebildet ist, Luft **durch** den Lufteinlass (45) einzublasen.

5. Spritzschutzeinrichtung (12) nach einem der voranstehenden Ansprüche, **dadurch gekennzeichnet,**
**dass** der Spritzerschutz (16) als knieförmiges Rohr mit einem Kniebereich (28) als abgewinkelter oder gekrümmter Bereich ausgebildet ist.

6. Spritzschutzeinrichtung (12) nach einem der voranstehenden Ansprüche, **dadurch gekennzeichnet,**
**dass** ein zwischen dem abgewinkelten oder gekrümmten Bereich (28) und dem Druckstück (14) angeordneter Zwischenbereich (48) des Spritzerschutzes (16) eine konkav gekrümmte Innenwand (50) und/oder eine Innenwand (50) mit elliptischem oder kreisförmigem Querschnitt aufweist.

7. Spritzschutzeinrichtung (12) nach einem der voranstehenden Ansprüche, **dadurch gekennzeichnet**,
7.1 dass das Druckstück (14) eine Durchgangsöffnung (62) zum Durchleiten des Laserschweißstrahls (58) zu der Laserstrahlaustrittsmündung (20) aufweist, wobei ein Lufteinlasskanal (64) mit einer von der Laserstrahlaustrittsmündung (20) weg gerichteten Richtungskomponente schräg in die Durchgangsöffnung (62) mündet, um einen von der Laserstrahlaustrittsmündung (20) weg führenden Absaugluftstrom zu erzeugen, oder wobei der Zwischenbereich (48) mehrere Nachströmöffnungen (76) aufweist, die oberhalb der Laserstrahlaustrittsmündung (20) angeordnet sind, und dazu eingerichtet sind, insbesondere über die Strömungswirkung innerhalb des Zwischenbereichs (48), Luft von außen anzusaugen, um einen von der Laserstrahlaustrittsmündung (20) weg führenden Absaugluftstrom zu erhalten; und/oder
7.2 dass die Laserstrahlaustrittsmündung (20) exzentrisch an dem Druckstückkörper (18) angeordnet ist.

8. Spritzschutzeinrichtung (12) nach einem der voranstehenden Ansprüche, **dadurch gekennzeichnet**,
8.1 dass das Druckstück (14) drehbar ist und/oder frei in seiner Drehlage änderbar ist;
8.2 dass das Druckstück (14) mittels eines Drehantriebes (66) angetrieben drehbar ist.

9. Spritzschutzeinrichtung (12) nach Anspruch 8, **dadurch gekennzeichnet, dass** der Spritzerschutz (16) mehrere Lasereintrittsöffnungen (30.1, 30.2) aufweist, die in zumindest einer Drehstellung des Druckstücks (14) mit der Laserstrahlaustrittmündung (20) einen Laserstrahldurchtrittskanal (82) ausbilden.

10. Spritzschutzeinrichtung (12) nach einem der voranstehenden Ansprüche, **gekennzeichnet durch**
10.1 eine Bewegungseinrichtung (72) zum Bewegen des Spritzerschutzes (16) und/oder des Druckstücks (14) auf das zu schweißende Bauteil zu und von diesem weg und/oder in Querrichtung hierzu; und/oder
10.2 eine bewegliche Konsole (40), auf die der Spritzerschutz (16) gesteckt und mit einer Verdrehsicherung (70) gegen Verdrehen gesichert ist.

11. Laserschweißvorrichtung (10) zum Laserschweißen von Kontaktelementen zur elektrischen Kontaktierung, insbesondere zum Schweißen von Kontaktelementen zur Batteriezellkontaktierung; umfassend eine Laserstrahlquelle (58) und eine Spritzschutzeinrichtung (12) nach einem der voranstehenden Ansprüche.

12. Laserschweißvorrichtung (10) nach einem der voranstehenden Ansprüche, wobei die Laserschweißvorrichtung (10) eine Steuerung (56) aufweist und dazu eingerichtet ist, die Laserstrahlaustrittsmündung (20) des Druckstücks (14) um eine Schweißstelle (60.1) herum zu platzieren und mittels des Druckstücks (14) das zu schweißende Bauteil auf einen Kontaktpartner zu drücken und mittels der Laserstrahlquelle (54) einen Laserstrahl durch die wenigstens eine Laserstrahleintrittsöffnung (30.1, 30.2) in dem Spritzerschutz (16) und die Laserstrahlaustrittsmündung (20) in dem Druckstück (14) auf die Schweißstelle (60.1) zu richten und dann die Laserstrahlaustrittsmündung zu der nächsten Schweißstelle (60.2) zu verfahren, um den Vorgang dort zu wiederholen.
